# EUROPEAN PATENT APPLICATION

(11) **EP 1 167 464 A2**
(43) Date of publication of application: **02.01.2002**
(21) Application number: 01305276.6
(22) Date of filing: 18.06.2001
(51) Int. Cl.: C09D 5/24, C09D 101/18, B32B 27/08

(54) **Antistatic membrane lidding for a container**

(30) Priority: 23.06.2000 US 602423
(71) Applicant: Sonoco Development, Inc., Hartsville, South Carolina 29550 (US)
(72) Inventor: Williams, Alan, Camden, South Carolina 29020 (US); Varadarajan, Krishnaraju, Florence, South Carolina 29505 (US); Stephens, Dwight L., Harwick, PA 15049 (US)
(74) Representative: Perkins, Sarah

(57) **Abstract**

An antistatic membrane lidding (14) for a container is disclosed. The membrane lidding includes a flexible film laminate (100) and an antistatic coating (116) formed on the flexible film laminate (100). The antistatic coating (116) is adapted to dissipate or prevent static electric buildup. In one embodiment the antistatic coating is applied to the bottom of the flexible film laminate. In another embodiment, the antistatic coating is a heat seal coating that is part of the flexible film laminate. The antistatic coating preferably includes at least 20% metal flakes by weight. The membrane lidding may also include an end ring which is adapted to attach to the container. At least a portion of the flexible film laminate is removably attached to the end ring. A method for forming the antistatic membrane lidding is also disclosed.

## Description

The present invention relates to the field of containers and, more particularly, to a membrane lidding with an antistatic coating for use with a container for storing dry goods.

Dry goods, such as coffee and powders, are typically stored in vacuum sealed containers to preserve their freshness. These containers come in many different configurations, such as vacuum sealed tin or aluminum cans, and composite canisters.

Recently, membrane lidding type containers have been developed for storing dry products. The containers include a membrane cover or lidding that is attached to the top of the container. The membrane lidding includes a flexible laminate film that is removable from the container to permit access to the container's contents. The flexible film laminate provides an airtight cover which is designed to flex or bow inward upon evacuation of the container, thereby reducing the container volume.

One membrane lidding currently available is manufactured by the assignee of the present invention under the trademark Ultraseal® . (Ultraseal® is a registered trademark of Sonoco Products Company, Hartsville, SC.) This lidding includes a laminate formed by adhesively bonding oriented PET, foil, nylon and Surlyn® film layers together. (Surlyn® is a registered trademark of E.I. Du Pont de Nemours and Company, Wilmington, DE.)

Another membrane lidding type product manufactured by the assignee of the present invention is sold under the trade name Sealed-Safe. This lidding includes a flexible laminate that comprises a foil film layer with an acrylic coating on one side and a heat seal coating on the opposite side.

One problem that develops in containers with both conventional metal end lids and membrane-type lids is that static electricity can cause dry goods in the container to become attracted to the container lid. The static electricity develops during handling of the container or lid. As a result, when the container is eventually opened, there is a tendency for the dry goods that remain attached to the lidding to spill out. This problem is particularly prevalent in membrane lidding type containers used to store coffee. The coffee grinds are typically located in close proximity to the container lidding and, thus, can be easily attracted to the lidding by static electricity. Also, if the membrane lidding includes a foil layer, then a polymer layer is usually applied between the foil layer and the container to provide sealability. The polymer layer, however, does not readily dissipate static charge and increases the tendency of the dry goods sticking to the lidding.

A need, therefore, exists for an improved membrane lidding for a dry goods container which prevents or readily dissipates static electrical charges on the lid.

The present invention relates to an antistatic membrane lidding for a container. The membrane lidding includes a flexible film laminate that has been adapted to dissipate or prevent static electric buildup on the membrane lid.

In one embodiment the antistatic coating is applied to the bottom of the flexible film laminate of a Ultraseal® or Sealed-safe membrane lid. The antistatic coating preferably includes at least 20% metal flakes by weight. In another embodiment, the heat seal coating of a Ultraseal® or Sealed-safe membrane lidding is modified to include at least 30% metal flakes by weight.

The membrane lidding may also include an end ring which is adapted to attach to the container. At least a portion of the flexible film laminate is removably attached to the end ring.

The foregoing and other features and advantages of the present invention will become more apparent in light of the following detailed description of the preferred embodiments thereof, as illustrated in the accompanying figures.

For the purpose of illustrating the invention, the drawings show a form of the invention which is presently preferred. However, it should be understood that this invention is not limited to the precise arrangements and instrumentalities shown in the drawings.
Figure 1A is a partial isometric view of a container with a membrane lid.
Figure 1B is a partial isometric view of the container in Figure 1A illustrating the membrane lidding in a partially open position.
Figure 2 is a cross-sectional view of a flexible membrane lidding with an anti-static coating according to the present invention.
Figure 3 is a cross-sectional view of one embodiment of a membrane lidding with an anti-static coating according to the present invention.
Figure 4 is a cross-sectional view of a second embodiment of a membrane lidding with an anti-static coating according to the present invention.
Figure 5 is a cross-sectional view of another embodiment of a membrane lidding with an anti-static sealing layer according to the present invention.
Figure 6 is a cross-sectional view of yet another embodiment of a membrane lidding with an anti-static sealing layer according to the present invention.

While the invention will be described in connection with one or more preferred embodiments, it will be understood that it is not intended to limit the invention to those embodiments. On the contrary, it is intended that the invention cover all alternatives, modifications and equivalents as may be included within its scope as defined by the appended claims.

Referring now to the drawings, wherein like reference numerals illustrate corresponding or similar elements throughout the several views, Figure 1A illustrates a membrane lidding type container 10 for use in storing or packaging dry goods, such as coffee. The container typically includes a side wall 12 and a metal ring membrane lidding 14. The metal ring 18 of the lidding 14 is attached to the side wall 12 through any conventional means known to those skilled in the art, such as, for example, by crimping or adhesive bonding. The lidding 14 includes a flexible film laminate 16 which covers an opening in the metal ring 18. The flexible film laminate 16 is preferably removably attached to an end ring 18 which, in turn, is secured to or formed on the side wall 12.

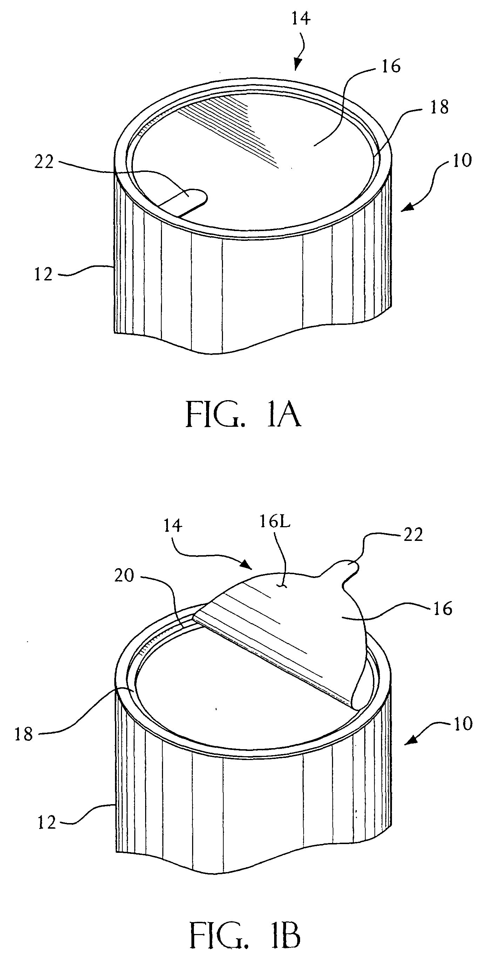

When the membrane lidding 14 is attached to a container, the flexible film laminate 16 covers an opening in the top of the container 10. In the illustrated embodiment, the film laminate 16 covers an opening 20 formed in the ring 18. The flexible film laminate 16 is preferably removably attached to the ring 18 about the periphery of the opening 20 to provide an air-tight closure. A pull tab 22 may be formed on the flexible film laminate to facilitate separation of the film laminate 16 from the ring 18 and/or container 10. Figure 1B illustrates the flexible film laminate 16 in a partially open position, peeled back from the ring 18.

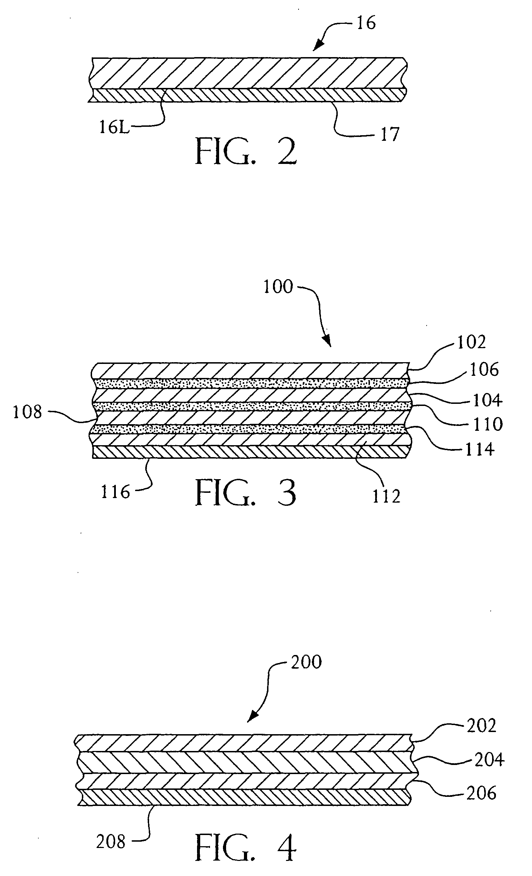

As discussed above, conventional membrane lidding is prone to the development of a static charge on the flexible film layer, which causes dry goods within the container to adhere to the lid. To prevent this from occurring, the present invention incorporates an antistatic coating 17 as a portion of or a coating disposed on the lower surface 16L of the flexible film laminate 16 (see, Figure 2). The film laminate can be formed in a variety of ways known to those skilled in the art. While the present invention is described hereinafter with respect to particular preferred laminate constructions, it should be readily apparent that such constructions are provided as examples and are by no means limiting. Hence, the invention is applicable to other types of flexible lidding constructions which are known to those skilled in the art.

Referring now to Figure 3, a partial cross-section of one embodiment of the film laminate 100 is shown. In this embodiment of the invention, an antistatic layer is applied as a coating on an existing flexible film laminate 100 of a membrane lidding 14 of the type sold by the assignee of the present invention under the trademark Ultraseal® .

The laminate 100 includes a first layer of polymeric film 102. In a preferred embodiment, the polymeric film layer is oriented polyethylene terephthalate (OPET) film. Alternatively, the first layer can be made from oriented nylon, oriented polyolefins, or oriented polypropylene. The first layer 102 is attached to a metallic film layer 104 with a suitable adhesive 106. The metallic film layer 104 is preferably a foil film. The opposite side of the metallic layer 104 is attached to a first side of a nylon film layer 108 with suitable adhesive 110. The second side of the nylon film layer 108 is attached to a thermoplastic film layer 112 also by a suitable adhesive 114. Preferably the thermoplastic film layer 112 is a Surlyn® film. Those skilled in the art would readily be capable of selecting suitable adhesives for attaching the various layers together depending on the intended use for the membrane lid.

In one specific embodiment of the invention, the nylon film layer 108 is adhesively laminated to a 150 gauge Suryln® film layer 112 using a two part urethane adhesive, preferably a Liofol Tycel 7975/7276 adhesive. The first layer 102 is preferably 48 gauge OPET, adhesively laminated to 150 gauge foil using a two part urethane adhesive system, such as a Liofol adhesive system. The OPET/foil laminate is then adhesively attached to the Surlyn/nylon laminate again preferably with a two part Liofol urethane adhesive system.

An antistatic coating 116 is disposed on or applied to at least a portion of the bottom surface of the sealing layer 112. Since the antistatic coating 116 is located on the inside surface of the lidding (i.e., the surface facing the dry goods), the antistatic coating 116 must be FDA approved for direct contact with food products. Also, since the coating is likely to come into contact with the food stuffs in the container, it is preferable that the coating does not affect the taste of the food, has no discernable odor, does not appear as an oily layer on the lidding (which is not cosmetically appealing to purchasers), and does not physically stick to dry products under pressure. In one embodiment of the invention, the antistatic coating 116 is a 2% glycerol monostearate (GMS) solution mixed in alcohol. The antistatic coating 116 is applied in a very thin uniform coverage to the thermoplastic layer 112. Proper application of the antistatic coating is important since, if the coating is incomplete, then the static charge will not be sufficiently dissipated and will result in patches of sticking dry goods. Also, if the coating is too thick then it will result in an oily residue that would be objectionable to the customer and cause dry product to stick to the lidding. Preferably the coating is applied to give a GMS coverage dry of between approximately 2 to 6 grams per 100,000 square inches.

In an alternate embodiment of the invention, the anti-static coating 116 is an FDA approved laquer that includes metal flakes. The metal flakes provide electrical conductivity in the coating which dissipates the buildup of static electricity. It is desirable that there be good contact between the flakes to provide sufficient conductivity. Testing has determined that a coating with metal flakes loading comprising at least about 20% by weight (on a final dried solids basis) provides sufficient conductivity. A preferred range would be between approximately 25% to approximately 40% by weight. Loading above 40% tends to produce a coating that is difficult to apply. Many types of metal flakes would be suitable in the present invention, such as aluminum flakes, provided the flakes meet FDA approval. Suitable metal flakes are available through many different commercial suppliers. The metal flakes can have any desired shape and size, although a size between about 1.0 and about 15 micron is sufficient to provide good overlap and contact to dissipate an electrical charge.

The laquer coating can be any suitable FDA approved laquer which will mix well with metal flakes. In a preferred embodiment determined through testing, the coating is a spray coating made using cellulose nitrate. A solvent based coating made with cellulose nitrate dissolved in alcohol, alcohol/ether, esters and/or mixtures thereof can also be used. Any polymeric binder can be used in the present invention provided that it binds well to the sealant surface and can be formulated with suitable levels of metal. The antistatic coating is applied using conventional methods and the residual solvent is removed by drying, such as in a downstream drying section of the process.

Plasticizers, such as alkyl phthalates, aryl phosphates, and alkyl polyvinyl ethers could be added to the antistatic coating, provided the plasticizers meet FDA approval. However, the addition of plasticizers is not necessary in the present invention.

Upon curing, the laquer forms a hard layer with no residual stickiness. The metal flakes form a semi-continuous layer within the laquer which provides good electrical conductivity for dissipating the development of a static electrical charge.

Referring to Figure 4, an alternate embodiment of the lidding is shown. In this embodiment, which is similar to the embodiment in Figure 3, the antistatic coating is, once again, applied to portion of a flexible film laminate 200. The flexible film laminate 200 in this embodiment is the Sealed-Safe membrane described above and manufactured by the assignee of the present invention. The flexible film laminate 200 includes an outer protective coating 202, which is preferably an acrylic coating. The outer coating 202 is formed on a metal film layer 204. The thickness of the metal film layer 204 will be selected depending on the intended use. In one configuration of the invention, the metal film layer 204 is a foil film that has a thickness between approximately 200 gauge and 500 gauge. In one particular embodiment, the foil film layer 204 has a thickness of approximately 250 gauge. In another configuration, the foil film layer 204 has a thickness of approximately 400 gauge. Other thicknesses, of course, can be used with the present invention. A heat seal coating 206 is formed on the inner surface of the foil film layer 204. The preferred heat seal coatings are vinyl acrylic and polyester materials that are commercially available from manufacturers, such as Watson Rhenania, Lawson Mardon, and Alcoa.

An antistatic coating 208, similar to the antistatic coating 116 described above with respect to Figure 3 (either spray or solvent based) is applied to or disposed on the heat seal coating 206.

In both of the above embodiments, the antistatic coating is added to an existing flexible film laminate. These embodiments would, of course, require an additional step in the manufacturing process when forming the membrane lidding, thus increasing the overall cost of manufacturing the lidding. The present invention also contemplates modifying the structure of the membrane lidding 14 to incorporate the antistatic coating into the flexible film laminate. This is accomplished by substituting a metal flake loaded heat seal coating for one or more components in the laminate. However, since a metal flake filled heat seal coating does not adhere well to polymeric films, such as nylon and OPET, the flexible film laminate must be reconfigured.

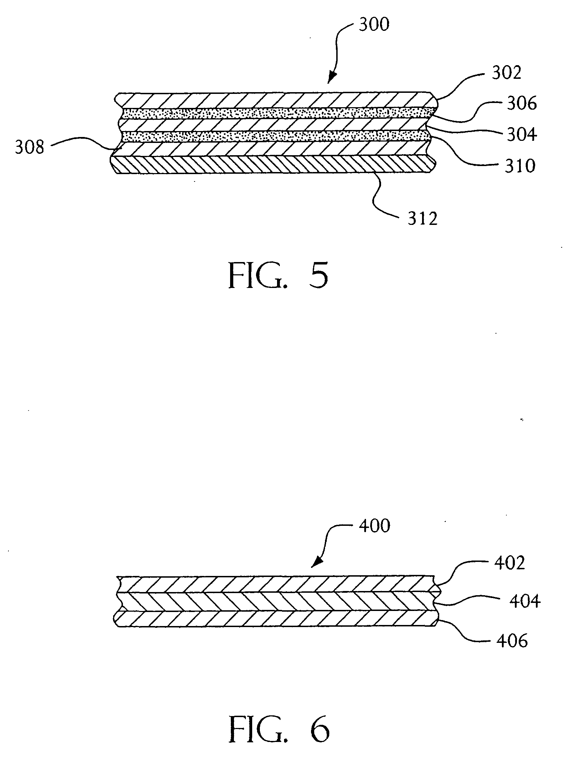

More particularly, and with reference to Figure 5, a modified embodiment ofthe Ultraseal® membrane lidding is shown. In this embodiment, the flexible film laminate 300 includes an outer or first layer of OPET film 302 adhesively bonded to a nylon film layer 304 through an adhesive layer 306. A metallic film layer 308, such as a foil film, is adhesively bonded to the nylon film layer 304 through an adhesive layer 310. As discussed with respect to the above embodiments, the adhesives are selected to provide suitable adhesion of the associated layers and to address the specific needs of the container.

An antistatic heat seal layer 312 is applied to or formed on the metallic film layer 308. The antistatic heat seal layer 312 includes metal flakes, for providing electric conductivity, mixed in a suitable sealant. It has been determined through testing that, in order to provide sufficient conductivity, the antistatic heat seal coating 312 preferably includes at least 30% metal flakes by weight. More preferably, the metal flakes comprise at least 40% by weight of the final dried coatings solids. A preferred range of metal flakes would be between approximately 30% to approximately 50% by weight. Loading above 50% tends to result in the metal precipitating or settling out of the coating solutions. It has also been determined that higher coverage of the antistatic heat seal 56 coating provides better antistatic protection. For example, while coverage of 5 1bs./ream provides marginal antistatic protection, 10 1bs/ream provides better protection and, therefore, is more preferred.

Referring now to Figure 6, another embodiment of the invention is shown wherein the laminate of the Seal-Safe membrane lidding described above and shown in Figure 4 is modified to incorporate metal flakes into the heat seal coating, instead of adding a separate antistatic coating. More particularly, the film laminate 400 includes an outer protective coating 402, which is preferably an acrylic coating. The outer coating 402 is formed on or applied to a metallic film layer 404, such as a foil film layer. The thickness of the metallic film layer 404 will be selected depending on the intended use for the membrane lid. An antistatic heat seal coating 406 is formed on or applied to the opposite side of the metallic film layer 404 from the outer coating 402. As discussed above, in order to provide sufficient conductivity in the antistatic heat seal coating 406, the coating includes at least 30% metal flakes by weight. More preferably, the metal flakes comprise at least 40% by weight of the final dried coatings solids.

Plasticizers can be used, if desired, in the heat seal coatings. For vinyl acrylic type heat seal coatings, plasticizers for PVC can be used. Those skilled in the art would be readily capable of selecting suitable plasticizers for polyester type heat seal coatings.

Referring back to Figures 1A, 1B and 2, in the embodiment of the invention that utilizes a metal ring 18 as part of the membrane lidding 14, the flexible film laminate 16 is heat sealed to the metal ring 18 about the periphery of the opening 20. If the antistatic coating 17 is applied to the flexible film laminate 16 as a separate coating (Figures 3 and 4), it is preferably not applied in the area where the flexible laminate 16 seals to the metal ring 18 since it would prevent or reduce the sealing of the flexible film laminate to the ring 18. Accordingly, it is preferable the antistatic coating 17 is applied after the flexible laminate 16 is heat sealed to the ring 18. If the antistatic coating 17 is the heat seal coating or layer of the flexible laminate 16 (Figures 5 and 6), it would be formed as part of the flexible film laminate before the laminate is heat sealed to the metal ring 18.

The present invention provides a novel structure for dissipating and/or preventing buildup of static electricity in a membrane-type lid. During development ofthe present invention, Energy Dispersive Spectrophotometry (EDS) and Scanning Electron Microscopy (SEM) tests were conducted on membrane lidding made according to the present invention. These tests have confirmed that a high concentration, semi-continuous aluminum flake layer develops at the surface of the coating which effectively dissipates static charge buildup.

While the present invention has been described as using metal within the laquer, it is also contemplated that electrically conductive pigments can be used instead. The pigments must have a sufficiently low resistance to allow passage of electric current through or over it. For example, the pigment should have a maximum powder resistance of 125 ohm-centimeters when subjected to 2 metric tons of compression.

Although the invention has been described and illustrated with respect to the exemplary embodiments thereof, it should be understood by those skilled in the art that the foregoing and various other changes, omissions and additions may be made therein and thereto, without parting from the scope of the present invention.

## Claims

1. A method of forming a membrane lidding with an antistatic coating for a container of dry products, the method comprising the steps of forming a flexible film laminate, the flexible film laminate having an anti-static coating formed on at least a portion of one side of the flexible film laminate.

2. A method according to claim 1 wherein the anti-static coating includes at least about 20% metal flakes by weight.

3. A method according to claim 2 wherein the anti-static coating includes a nitrocellulose resin.

4. A method according to claim 1 wherein the anti-static coating is formed by mixing metal flakes with a nitrocellulose coating solution, and removing residual solvent from the coating to reduce tackiness.

5. A method according to claim 4, wherein the nitrocellulose coating solution is formed by dissolving cellulose nitrate in at least one component selected from a group consisting of alcohol, alcohol/ether, and esters.

6. A method according to claim 2 wherein the anti-static coating includes a polymeric binder that binds well to a sealant surface and is adapted to receive high levels of metal flakes.

7. A method according to claim 2 wherein the metallic flakes include at least aluminium flakes.

8. A method according to claim 7 wherein the aluminium flakes have a size between about 1.0 microns and about 15 microns.

9. A method according to claim 1 wherein the antistatic coating is made from a 2% glycerol monostearate (GMS) solution mixed in alcohol.

10. A method according to claim 1 wherein the flexible film laminate is formed by a method comprising the steps of adhesively bonding an oriented PET film layer to a first side of a nylon film layer, and adhesively bonding a second side of the nylon film layer to a first side of a metallic film layer; and wherein the anti-static coating is a heat sealing coating that includes at least about 30% metal flakes by weight, and wherein the anti-static coating is applied to a second side of the metallic film layer.

11. A method according to claim 1 wherein the membrane lidding further comprises an end ring adapted to be attached to a container, and wherein the method of forming the membrane lidding further comprises the step of heat sealing the flexible film laminate to the end ring.

12. An antistatic membrane lidding for a container, the membrane lidding comprising a flexible film laminate having an antistatic coating on at least a portion of one side.

13. An antistatic membrane lidding according to claim 12 wherein the flexible film laminate includes a first polymeric film layer, a metallic film layer adhesively attached to the polymeric film layer, a nylon film layer adhesively attached to the metallic film layer, and a thermoplastic film layer adhesively attached to the nylon layer; and wherein the antistatic coating is formed on the thermoplastic film layer of the flexible film laminate and is formed from a 2% glycerol monostearate (GMS) solution mixed in alcohol.

14. An antistatic membrane lidding according to claim 13 wherein the antistatic coating includes electrically conductive material,.

15. An antistatic membrane lidding according to claim 12 wherein the flexible film laminate includes a metallic film layer, an acrylic coating formed on one side of the metallic film layer, and a heat seal coating formed on the other side of the metallic film layer; and wherein the antistatic coating is formed on the heat seal coating of the flexible film laminate.

16. An antistatic membrane lidding according to claim 15, wherein the antistatic coating includes at least 30% metal flakes by weight.

17. An antistatic membrane lidding according to claim 12 wherein the flexible film laminate includes a first polymeric film layer, a nylon film layer adhesively attached to the polymeric film layer, a metallic film layer adhesively attached to the nylon film layer, and wherein the antistatic coating is an antistatic heat seal coating formed on the metallic film layer, the antistatic heat seal coating including at least 30% metal flakes by weight.

18. An antistatic membrane lidding according to claim 12 wherein the flexible film laminate includes a metallic film layer, an acrylic coating formed on one side of the metallic film layer, and wherein the antistatic coating is an antistatic heat seal coating formed on the other side of the metallic film layer, the antistatic heat seal coating including at least 30% metal flakes by weight.
